# EUROPÄISCHE PATENTSCHRIFT

(11) **EP 2 290 768 B1**
(45) Veröffentlichungstag und Bekanntmachung des Hinweises auf die Patenterteilung: **26.10.2016**
(21) Anmeldenummer: 10405146.1
(22) Anmeldetag: 02.08.2010
(51) Int. Cl.: H02B 1/28, H02B 1/38

(54) **Druckfester Elektroschrank**
Pressure-resistant electric cabinet
Armoire électrique résistant à la pression

(30) Priorität: 28.08.2009 CH 13392009
(43) Veröffentlichungstag der Anmeldung: 02.03.2011
(73) Patentinhaber: Swibox AG, 8362 Balterswil (CH)
(72) Erfinder: Zwahlen, Hans-Ulrich, 3067 Boll (CH); Huwiler, Walter, 9500 Wil (CH)
(74) Vertreter: Gachnang, Hans Rudolf

(56) Entgegenhaltungen:
- EP-A1- 1 031 693
- DE-C1- 19 939 614

## Beschreibung

Gegenstand der Erfindung ist ein druckfester Elektroschrank gemäss Oberbegriff des Patentanspruchs 1.

Druckfeste Elektroschränke, insbesondere Schaltanlagenschränke sind bekannt und dienen dazu, das Bedienungspersonal und gegebenenfalls auch andere Personen, die sich in der Umgebung von Schaltanlagen aufhalten vor Auswirkungen von inneren Lichtbögen und dergleichen zu schützen. Es geht also darum zu verhindern, dass die Tür bei Druckerhöhung im Innern aus den Scharnieren gehoben wird und/oder dass gesundheitsgefährdende Dämpfe, die bei offenem Feuer oder einem Schwelbrand in der Schaltanlage entstehen, in die Umgebung entweichen können.

Bei den bekannten Schränken wird die Verriegelung der Tür mit dem Schaltschrank durch Absenken der Tür und dabei Verrasten der letzteren mit entsprechenden Verriegelungselementen bewirkt. Bei solchen Verriegelungsmechanismen ist es nicht zu vermeiden, dass beim Schliessen und beim Öffnen grosse Reibkräfte entlang der aufeinanderliegenden Teile von Tür und Schrank überwunden werden müssen. Ist zudem eine Dichtung aus weichem Gummi an einem der Teile angeordnet, so erhöhen sich die Reibkräfte zusätzlich, da die Dichtung beim Absenken und Anheben auf Scherung belastet wird. Zudem erhöht sich der Kraftaufwand insbesondere beim Öffnen, wenn die Tür einen grossen Querschnitt aufweist und zudem für hohe Drücke ausgelegt ist und dementsprechend eine hohe Masse aufweist.
Aus der DE 39 40 500 ist weiter bekannt, bei einer druckfest verschliessbaren Tür für gekapselte Schaltanlagen die Tür derart auszubilden, dass Sie beim Schliessen scharnierseitig das Gehäuse der Schaltanlage hintergreift und auf der gegenüberliegenden Seite Mittel vorhanden sind, um auch dort einen Riegel hinter ein Rückhalteelement am Gehäuse der Schaltanlage zu schieben. Durch die beidseitig über die gesamte Türhöhe sich erstreckenden, das Gehäuse innen überlappenden Riegel können im Innern der Schaltanlage auftretende Drücke, nicht aber der Austritt von giftigen Gasen nach einem Ereignis zurückgehalten werden.

Die DE19939614 C1 offenbart einen druckfesten Schaltschrank bei dem eine Schranktür zuverlässig an dem Schrankgehäuse verriegelt werden kann.

Vorbeifahrende Züge in Eisenbahntunnels verursachen sehr grosse Druck- und Sogwellen, welche die Steuer- und Elektroschränke durch Druckanstiege und Druckabfälle stark belasten. Da die Schränke zum Schutz der eingebauten elektronischen Bauteile eine hohe Dichtigkeit gegen Schmutz und Feuchtigkeit aufweisen und ganz allgemein den rauhen Tunnelbedingungen über mehrere Jahre wartungsfrei standhalten müssen, werden an die Festigkeit des Schranks, dessen Tür oder Türen und die Dichtigkeit höchste Ansprüche gestellt. Insbesondere sind auch die beweglichen Teile der Tür und des Schranks, insbesondere die Scharniere, hohen Belastungen ausgesetzt.

Eine Aufgabe der vorliegenden Erfindung besteht nun darin, einen druckfesten Elektroschrank zu schaffen, der in Tunneln für Hochgeschwindigkeitszüge, den dort auftretenden Druckwellen auf Dauer standhält und den Eintritt von Schmutz und Feuchtigkeit in den Schrank trotz häufiger Druckwechsel durch die vorbeifahrenden Züge verhindert.

Gelöst wird diese Aufgabe durch einen Elektroschrank gemäss den Merkmalen des Patentanspruchs 1. Vorteilhafte Ausgestaltungen des Elektroschranks sind in den abhängigen Ansprüchen näher umschrieben.

Durch eine im wesentlichen translatorische Verschiebung der Tür parallel zur Oberfläche des Elektroschranks kann eine umlaufend sichere gleichmässige Abdichtung erlangt werden. Dadurch müssen beim Schliessen und beim Öffnen keine Reibkräfte an der Türdichtung überwunden werden. Es sind auch keine Hebekräfte nötig, um die Tür aus einer abgesenkten Verschlussstellung in die Öffnungsstellung zu bringen. Die Reibung innerhalb des Verriegelungsmechanismus kann durch geeignete Materialwahl auf ein Minimum beschränkt werden. Die Schranktür wird auf mehreren Seiten, in der Regel der Scharnier- und der Verschlussseite, mit einem in die Türverstrebung integrierten und zentral zu bedienenden Schliesssystem verriegelt. Durch Versteifungen zwischen diesen Verriegelungsebenen, in der Tür und im Schrank, wird erreicht, dass der Schrank aufgrund von Druckbelastungen nicht unzulässig verbiegen kann.
Die Integration des Verriegelungssystems in die Verstrebungen hat den Vorteil, dass kein Aufbau mit Verbindungselementen und einer zusätzlichen Reibfläche notwendig ist. Die doppelseitige Ausführung des Schliessmechanismus entlastet die Scharniere und verriegelt die Türverstrebungen mit den Verstrebungen des Schrankgehäuses auf starre und druckerresistente Art und Weise. Eine umlaufende Dichtung, welche beim Schliessen um mehrere Millimeter komprimiert wird sowie das Abdichten der restlichen Durchbrüche mit o-Ringen ermöglicht eine 100%ige Gasdichtheit. Dieser Aufbau kann Druckbelastungen von +/- 10 kFa (1 t/m2) als Wechseldruckbelastung aufnehmen.

Anhand eines illustrierten Ausführungsbeispiels wird die Erfindung näher erläutert. Es zeigen
- Figur 1: einen Vertikalschnitt durch die verschlossene Tür an einem Elektroschrank,

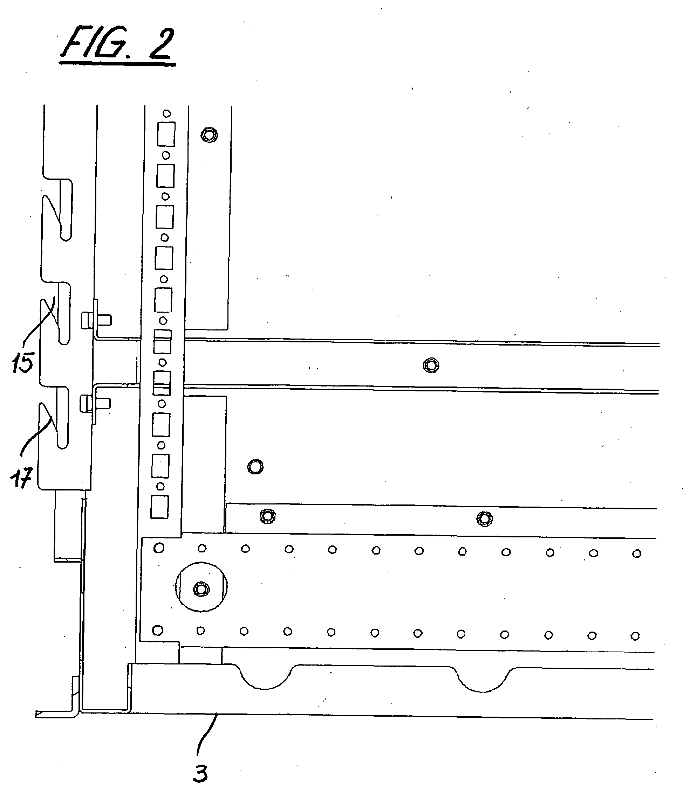

- Figur 2: einen Vertikalschnitt durch den Elektroschrank ohne Tür,
- Figur 3: einen Horizontalschnitt längs Linie I-I in Figur 1 durch den scharnierseitigen Bereich eines Schranks,
- Figur 4: eine Frontansicht des Schranks mit teilweise geöffneter Tür,
- Figur 5: eine Detailansicht der geschlossenen Tür von innen,

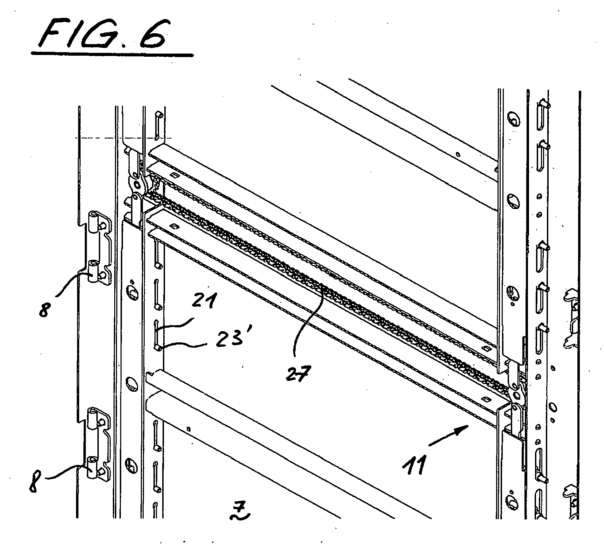

- Figur 6: eine Detailansicht des Antriebs der Verriegelungselemente.

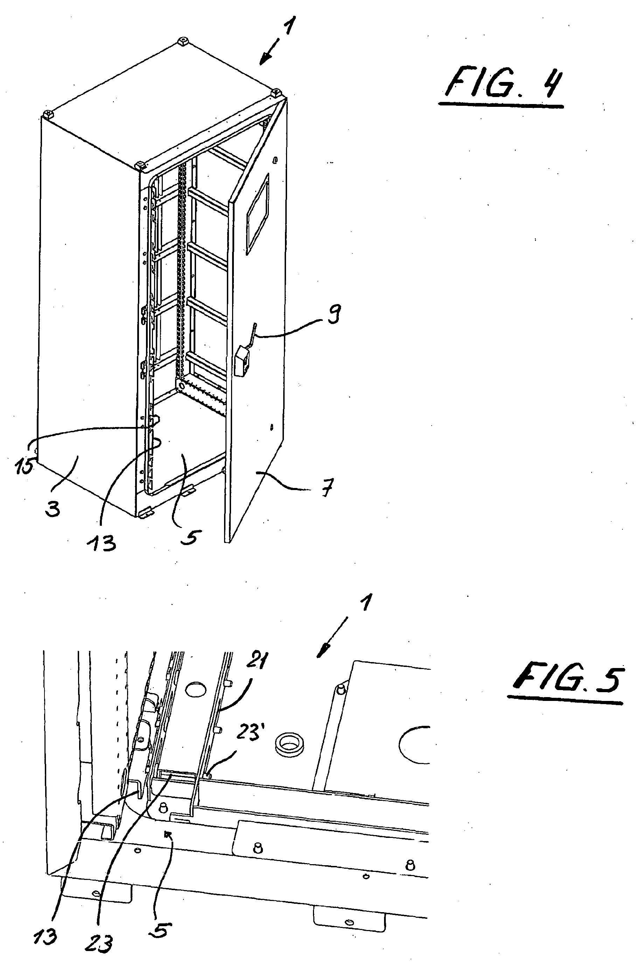

In Figur 4 ist schematisch ein druckfester Elektroschrank 1 dargestellt. Dieser umfasst ein Gehäuse 3 mit einer rechteckigen Türöffnung 5 und eine um eine vertikale Achse seitlich am Gehäuse 3 angelenkte und von Scharnieren 8 getragene Tür 7. Im Türblatt der Tür 7 ist ein Hebel 9 sichtbar, mit dem eine Verriegelungsvorrichtung 11 an der Rückseite der Tür 7 betätigt werden kann.

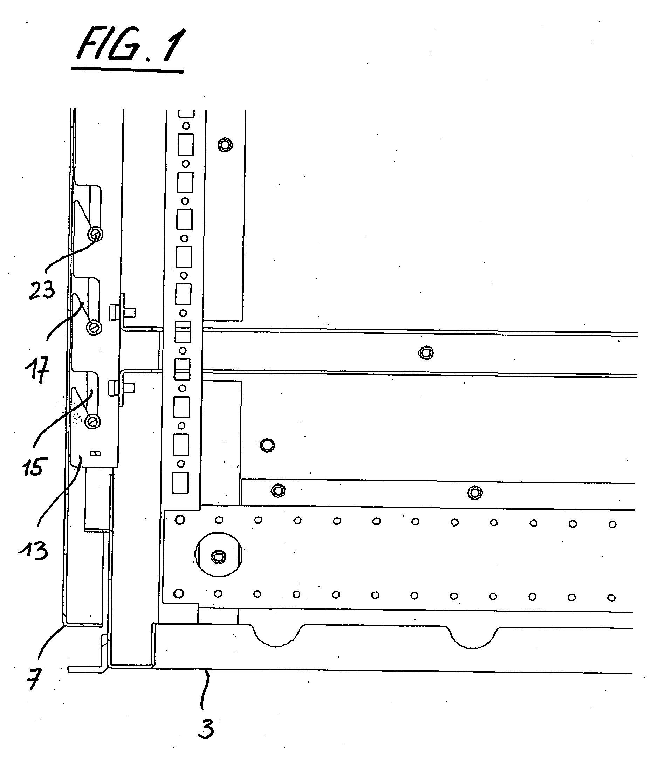

An der linken Türseite in den Figuren 1 und 4 ist eine Verstrebung 13 in Gestalt eines abgewinkelten Bleches mit dem Gehäuse 3 verbunden. In der Verstrebung sind gegen die freie Kante hin offene, in einem spitzen Winkel zur Vertikalen verlaufende Schlitze 15 eingelassen. Die Schlitze 15 sind an ihrem unteren Ende in der Vertikalen verlaufend ausgebildet. D.h. eingangsseitig liegt die untere Kante 17 in einem spitzen Winkel zur Vertikalen und geht danach über in die vertikale Richtung.

An der Türöffnung 5 am Gehäuse 3 sind mindestens an den beiden vertikal verlaufenden Kanten Verstrebungen 13 mit den Schlitzen 15 angeordnet. Selbstverständlich könnten auch an den beiden horizontal verlaufenden Kanten der Türöffnung 5 analog ausgebildete Verstrebungen befestigt sein (keine Abbildung).

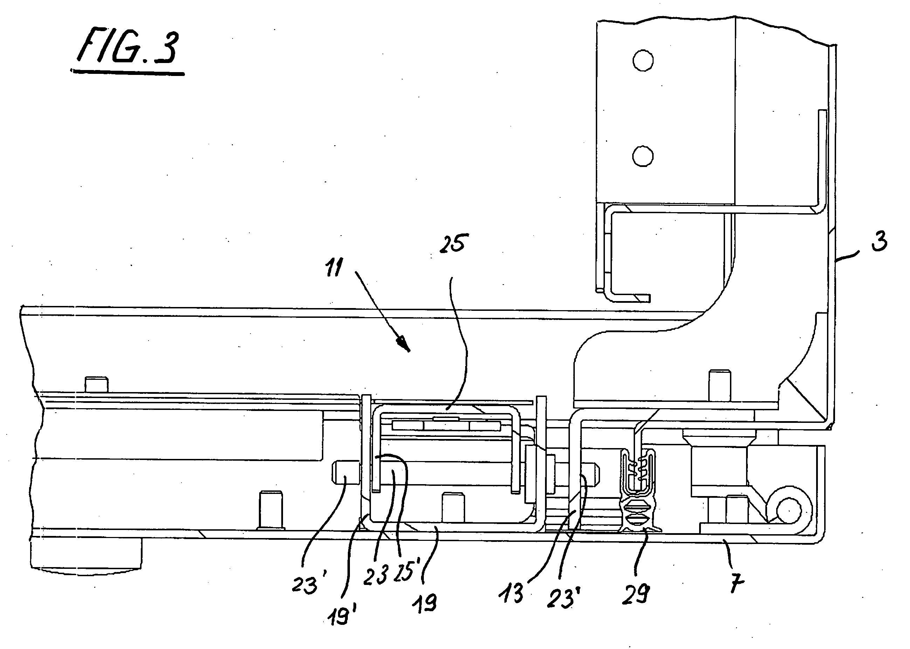

An der Innenseite der Tür 7 ist als tragende Aussteifung 18 ein u-förmiges Profil 19 befestigt, z.B. verschraubt oder verschweisst, dessen Schenkel 19' zur Türöffnung hin gerichtet sind. In den Schenkel 19' sind, in Serie angeordnet, parallel zu den Kanten der Schenkel 19 verlaufende Langlöcher 21 eingelassen (vgl. Figuren 3 und 5). Die Langlöcher 21 dienen zum Führen von Verschlusswellen 23, deren Enden 23' die Schenkel 19' überragen. Die Verschlusswellen 23 sind ihrerseits in einem u-förmigen Profil 25 bzw. in dessen beiden Schenkeln 25' befestigt und können mit dem u-förmigen Profil 25 in den Langlöchern 21 synchron verschoben werden.

Das u-förmige Verrippungsprofil 25 ist mit dem Hebel 9 über geeignete Verbindungsmittel verbunden. Als Verbindungsmittel können Gestänge (keine Abbildung) oder eine Kette 27 eingesetzt werden, welche vom Hebel 9 angetrieben werden, um das Verriegelungsprofil 25 mit den Verschlusswellen 23 nach unten respektive nach oben zu verschieben. Beim Schliessen der Tür 7 gelangen die Enden 23' der Verschlusswellen 23 in die Schlitze 15 an der Vertrebung 13. Durch eine Drehung des Hebels 9 gleiten die Enden 23' entlang der unteren Kante 17 der Schlitze 15 nach unten und ziehen dabei die Tür 7 an die Türöffnung 5 und eine dort angebrachte Dichtung 29. Die Dichtung 29 wird dadurch stark zusammengepresst und liegt gasdicht am Gehäuse 3 an. Durch den vertikal verlaufenden Abschnitt der Schlitze 15 werden die Verschlusswellen 23 und damit auch sicher in der Endposition gehalten.
Die Dimensionierungen bzw. örtliche Anordnungen der Verschlusswellen 23 und der Schlitze 15 in der Verstrebung 13 sind derart ausgelegt, dass nach dem Anziehen der Tür 7 die Scharniere 8 einerseits vom Gewicht der Türe 7 und andererseits von auf die Tür 7 wirkenden Drücke/Kräfte vollständig entlastet sind.

Das Öffnen der Tür folgt in umgekehrter Reihenfolge, d.h. der Hebel 9 wird zurückgeschwenkt, was mit sehr geringer Kraft möglich ist, insbesondere wenn die Materialpaarungen der aufeinandergleitenden Teile (Verstrebung 13 und Enden 23' der Verschlusswellen 23) geeignet gewählt sind. Letztere können in einer vorteilhaften Ausgestaltung drehbar ausgebildet sein, so dass nicht ein Gleiten, sondern ein Abrollen der Enden 23' auf den Flächen 17 der Schlitze 15 erfolgt.

## Patentansprüche

1. Druckfester Elektroschrank, umfassend ein Schrankgehäuse (3) mit einer Türöffnung (5), eine am Schrankgehäuse (3) seitlich angelenkte Tür (7), eine umlaufende Dichtung (29) und entlang mindestens zweier Türkanten angeordnete Verriegelungselemente, welche beim Verriegelungsvörgang die Tür (7) an die Türöffnung (5) anpressen, wobei die Tür (7) während des Verriegelungsvorgangs vertikal unverschiebbar von Scharnieren (8) getragen wird,
**dadurch gekennzeichnet, dass**
die Tür (7) beim Verriegelungsvorgang, welcher der Schwenkbewegung der Tür (7) folgt, mit der Verrieglungsvorrichtung (9,11) lotrecht an die umlaufende Dichtung (29) an der Türöffnung (5) heranführbar ist, derart, dass die Scharniere (8) am Ende des Verriegelungsvorgangs von auf diese einwirkenden Kräften entlastet sind und das Innere des Elektroschranks (1) bei Druckanstiegen und Druckabfällen gasdicht gegen aussen und innen verschlossen ist.

2. Elektroschrank nach Anspruch 1, **dadurch gekennzeichnet, dass** an der Türöffnung (5) des Schrankgehäuses (3) Verstrebungen (13) angeordnet sind, welche L-förmige Schenkel umfassen, wobei die freie Kante des einen Schenkels von der Türöffnung (5) weg gerichtet ist und in diesem Schenkel in einem spitzen Winkel zur Vertikalen verlaufende Schlitze (15) eingelassen sind.

3. Elektroschrank nach einem der Ansprüche 1 oder 2, **dadurch gekennzeichnet, dass** die Schlitze (15) an ihrem offenen Ende einen horizontal verlaufenden Einlaufabschnitt aufweisen.

4. Elektroschrank nach Anspruch 3, **dadurch gekennzeichnet, dass** der untere Bereich der Schlitze (15) vertikal verläuft.

5. Elektroschrank nach einem der Ansprüche 2 bis 4, **dadurch gekennzeichnet, dass** als Verriegelungselemente an der Innenseite der Tür (7) in Serie übereinander angeordnete und synchron durch ein Betätigungselement (9) verschiebbare Verschlusswellen (23) fungieren, welche in die Schlitze (15) an den Verstrebungen (13) eingreifen.

6. Elektroschrank nach Anspruch 5, **dadurch gekennzeichnet, dass** die Verriegelungselemente (11) durch eine Kette (27) oder ein Gestänge über einen Hebel (9) betätigbar sind.

7. Elektroschrank nach einem der Ansprüche 5 oder 6, **dadurch gekennzeichnet, dass** die Verriegelungselemente (11) mit dem Verriegelungsprofil (25) als Aussteifung der Tür (7) fungieren und das Blatt der Tür (7) frei von Schliesskräften halten.

8. Elektroschrank nach einem der Ansprüche 5 bis 8, **dadurch gekennzeichnet, dass** bewegliche Elemente zum Schliessen und Öffnen der Tür (7) innerhalb der Dichtung (29) angeordnet und somit vor Umwelteinflüssen geschützt sind.

## Claims

1. A pressure-resistant electrical cabinet, comprising a cabinet housing (3) having a door opening (5), a door (7) which is hinged laterally to the cabinet housing (3), a continuous seal (29) and locking elements arranged along at least two door edges, which press the door (7) onto the door opening (5) during the locking process, wherein the door (7) is supported vertically in a non-displaceable manner by hinges (8) during the locking process,
**characterized in that,**
during the locking process which follows the swiveling movement of the door (7), the door (7) can be guided to the door opening (5) with the locking device (9,11) perpendicular to the continuous seal (29), such that the hinges (8) are relieved of the forces acting thereon at the end of the locking process and the inside of the electrical cabinet (1) is sealed against the inside and outside in a gas-tight manner in the event of increases in pressure and decreases in pressure.

2. The electrical cabinet according to Claim 1, **characterized in that** struts (13) are arranged at the door opening (5) of the cabinet housing (3), said struts comprising L-shaped legs, wherein the free edge of the one leg faces away from the door opening (5) and slots (15) extending at an acute angle to the vertical are integrated into this leg.

3. The electrical cabinet according to any one of Claims 1 or 2, **characterized in that** the slots (15) comprise a horizontally extending inlet portion at their open end.

4. The electrical cabinet according to Claim 3, **characterized in that** the lower region of the slots (15) extends vertically.

5. The electrical cabinet according to any one of Claims 2 to 4, **characterized in that** locking shafts (23), which are arranged in series above one another on the inside of the door (7) and which can be displaced synchronously by means of an actuating element (9), which locking shafts engage in the slots (15) on the struts (13), act as locking elements.

6. The electrical cabinet according to Claim 5, **characterized in that** the locking elements (11) can be actuated by a chain (27) or a linkage by means of a lever (9).

7. The electrical cabinet according to any one of Claims 5 or 6, **characterized in that** the locking elements (11) having the locking profile (25) act as bracing for the door (7) and keep the leaf of the door (7) free from closing forces.

8. The electrical cabinet according to any one of Claims 5 to 8, **characterized in that** movable elements for closing and opening the door (7) are arranged inside the seal (29) and are therefore protected against environmental effects.

## Revendications

1. Armoire électrique résistant à la pression, comprenant un corps d'armoire (3) doté d'un jour de porte (5), une porte (7) articulée latéralement sur le corps d'armoire (3), un joint d'étanchéité (29) périphérique et des éléments de verrouillage disposés le long d'au moins deux bords de porte, qui, lors du procédé de verrouillage, pressent la porte (7) contre le jour de porte (5), la porte (7) étant portée de manière immobile verticalement par des charnières (8) pendant le procédé de verrouillage,
**caractérisée en ce que**
lors du procédé de verrouillage, qui suit le mouvement de pivotement de la porte (7), la porte (7) peut être amenée vers le jour de porte (5) perpendiculairement au joint d'étanchéité (29) périphérique avec le dispositif de verrouillage (9, 11), de telle manière que, à la fin du procédé de verrouillage, les charnières (8) sont déchargées de forces agissant sur celles-ci et que l'intérieur de l'armoire électrique (1) est fermé de manière étanche au gaz de l'extérieur et de l'intérieur en cas de montées de pression et de chutes de pression.

2. Armoire électrique selon la revendication 1, **caractérisée en ce que** des entretoises (13), qui comprennent des flancs en forme de L, sont disposées sur le jour de porte (5) du corps d'armoire (3), le bord libre de l'un des flancs étant orienté à l'opposé du jour de porte (5) et des fentes (15) s'étendant selon un angle aigu par rapport à la verticale étant ménagées dans ce flanc.

3. Armoire électrique selon une des revendications 1 ou 2, **caractérisée en ce que** les fentes (15) comportent sur leur extrémité ouverte une partie d'entrée s'étendant horizontalement.

4. Armoire électrique selon la revendication 3, **caractérisée en ce que** la zone inférieure des fentes (15) s'étend verticalement.

5. Armoire électrique selon une des revendications 2 à 4, **caractérisée en ce que** des axes de fermeture (23) disposés les uns au-dessus des autres en série sur le côté intérieur de la porte (7), déplaçables de manière synchrone par un élément d'actionnement (9) et qui viennent en prise dans les fentes (15) sur les entretoises (13), servent d'éléments de verrouillage.

6. Armoire électrique selon la revendication 5, **caractérisée en ce que** les éléments de verrouillage (11) peuvent être actionnés par une chaîne (27) ou un système de tiges par le biais d'un levier (9).

7. Armoire électrique selon une des revendications 5 ou 6, **caractérisée en ce que** les éléments de verrouillage (11) avec le profilé de verrouillage (25) font fonction de renforcement de la porte (7) et maintiennent le vantail de la porte (7) à l'abri de forces de fermeture.

8. Armoire électrique selon une des revendications 5 à 8, **caractérisée en ce que** des éléments mobiles destinés à fermer et ouvrir la porte (7) sont disposés à l'intérieur du joint d'étanchéité (29) et ainsi protégés des influences de l'environnement.
